# EUROPÄISCHE PATENTANMELDUNG

(11) **EP 1 662 454 A2**
(43) Veröffentlichungstag der Anmeldung: **31.05.2006**
(21) Anmeldenummer: 05025253.5
(22) Anmeldetag: 18.11.2005
(51) Int. Cl.: G08B 21/18, G08B 21/02

(54) **Frühwarnsystem, insbesondere für Kopfschmerzpatienten**

(30) Priorität: 24.11.2004 DE 102004056767
(71) Anmelder: Engelhard, Elisabeth, Dr., 80336 München (DE)
(72) Erfinder: Engelhard, Elisabeth, Dr., 80336 München (DE)
(74) Vertreter: HOFFMANN EITLE

(57) **Zusammenfassung**

Die vorliegende Erfindung betrifft eine Vorrichtung, umfassend ein Barometer und/oder ein Thermometer und/oder ein Hydroskop und/oder eine Messvorrichtung zur Messung von Elektrosmog und ein Alarmsystem. Insbesondere betrifft die Erfindung die Verwendung einer solchen Vorrichtung um Patienten, die empfindlich auf Luftdruck/ Temperatur/Feuchtigkeits/Elektrosmog-Veränderungen bzw. bestimmte absolute Werte reagieren, vor einer solchen Veränderung durch einen Alarm zu warnen.

## Beschreibung

Die vorliegende Erfindung betrifft eine Vorrichtung, umfassend ein Barometer und/oder ein Thermometer und/oder ein Hygrometer und/oder eine Messvorrichtung für "Elektrosmog" und ein damit verbundenes Alarmsystem. Insbesondere betrifft die Erfindung die Verwendung einer solchen Vorrichtung um Patienten, die empfindlich auf Veränderungen eines der obigen Parameter reagieren, vor einer solchen Veränderung durch einen Alarm zu warnen, wobei bevorzugt die Warnung durch Mustererkennung auf den bestimmten Patienten abgestimmt ist.

Es ist bekannt, dass es verschiedene Zustände oder Krankheiten gibt, die bei dafür empfänglichen Patienten durch allgemein gesprochen "das Wetter" bzw. weitere durch die Umwelt hervorgerufene Bedingungen ausgelöst werden. Dabei sind die tatsächlichen Auslöser z.B. Luftdruckveränderungen, bestimmte absolute Luftdrücke, bestimmte absolute Temperaturen, Temperaturveränderungen, oder z.B. Veränderungen des Feuchtigkeitsgehalts der Umgebung wie auch Einflüsse durch von Elektrizität oder Magnetismus abgeleitete Phänomene wie Gewitter aber auch Handys und für Handys eingerichtete Sendestationen ("Elektrosmog"). Dabei steht z.B. der Feuchtigkeitsgehalt der umgebenden Luft in direktem Zusammenhang mit dem Luftdruck und der Temperatur. Niedriger Druck ist z.B. mit hoher Feuchtigkeit assoziiert während hoher Luftdruck mit niedriger Feuchtigkeit assoziiert ist (siehe z.B. www.gut-reaction.freeserve.co.uk/bio-meteorology). Zu den oben genannten Zuständen und Krankheiten zählen insbesondere Kopfschmerzen, Migräne, innere Unruhe, Depression, Asthma, Rheuma, Amputationsschmerzen, Magenbeschwerden und Gelenk- und Gliederschmerzen (siehe z.B. Prince et al., The Journal of Head and Face Pain, Ausgabe 44(6), Seite 596 ff, April 2004). Häufig beginnen die Beschwerden, z.B. setzt ein leichter Kopfschmerz ein, bevor der/die Betroffene an seiner Umgebung wahrnehmen kann, dass der Luftdruck bzw. die Feuchtigkeit und/oder die Temperatur sich verändert haben. Starke Luftdruckveränderungen z.B. erreichen einen Betroffenen häufig, bevor dieser eine Wetterveränderung bemerken kann, z.B. durch das Auftreten von Wolken an einem bislang wolkenfreien Himmel bzw. durch das Auftauchen der Sonne bei bislang wolkenverhangenem/regnerischen Wetter.

Unter Elektrosmog werden im allgemeinen elektrische oder elektromagnetische (Wechsel)-felder verstanden. Unter elektrischen Feldern versteht man dabei das Kraftfeld, mit dem sich ein geladener Körper umgibt. Es wird im allgemeinen durch die Feldstärke gemessen (Volt/Meter). Ein elektrisches Feld entsteht immer dann, wenn zwischen zwei Punkten in einem Raum eine elektrische Potentialdifferenz vorliegt. Beispielsweise bildet sich zwischen Erdoberfläche und den stark aufgeladenen Luftschichten darüber (Ionosphäre) ein elektrisches Feld aus: je nach Wetterlage und Reinheit der Luft zwischen 100 und 500 V/m. In einem Gewitterzentrum liegen die Feldstärken bei 3000 bis 20000 V/m. Ferner sind alle Geräte, die mit Netzstrom betrieben werden, Quellen elektrischer Felder. Ein elektrisches Wechselfeld dringt typischerweise kaum in den Körper ein und schwankt in einem typischen deutschen Haushalt zwischen 1 und 100 V/m. Die Schwingungsfrequenz des Wechselfeldes wird in Hertz angegeben, wobei ein Hertz einer Sinusschwingung pro Sekunde entspricht. Magnetische Felder dagegen werden von Magneten erzeugt. Ein magnetisches Feld besitzt im Gegensatz zum elektrischen Feld keine unmittelbare Feldquelle. Vielmehr ist es gekoppelt an jede Bewegung einer elektrischen Ladung. Die Stärke des Magnetfelds, genauer gesagt, die magnetische Flussdichte oder Induktion wird in Tesla angegeben. Das natürliche magnetische Feld der Erde hat in Deutschland eine Stärke von etwa 40 bis 50 Mikrotesla, im künstlichen Magnetfeld des Kernspintomografen etwa 1 bis 4 Tesla. Magnetische Felder durchdringen fast alle Materialien und lassen sich kaum abschirmen. Im menschlichen Körper entstehen dabei frequenzabhängige Wirbelströme. Das quasi-statische Magnetfeld der Erde beträgt in Deutschland ca. 40 MikroTesla, das natürlich Wechselfeld ca. 0,000.001 Mikrotesla.

Dabei besteht zwischen allen elektrischen und magnetischen Erscheinungen ein enger Zusammenhang, d.h. elektrische Ströme rufen magnetische Wirkungen hervor und magnetische Felder rufen elektrische Wirkungen hervor. Insbesondere werden bei sehr schnell wechselnden Potentialen die im dazwischen liegenden Feld befindlichen Raumladungen nicht mehr in die Potentialpunkte zurückfließen und in den weiteren Raum als elektromagnetische Welle emittiert. Daher werden beide Phänomene zusammengefasst als Elektromagnetismus bezeichnet. Trifft eine elektromagnetische Welle auf einen Mensch, dann wird die Energie in einen anderen Zustand, überwiegend Wärme, transformiert.

Elektrosmog kann von den Betroffenen häufig ausschließlich durch den dann einsetzenden Schmerz, jedoch nicht durch andere Perzeptionssysteme erkannt werden.

Dem Prince et al Artikel, supra, ist auch beispielhaft zu entnehmen, dass die "Wetterfühligkeit" am Beispiel der Migräne von Person zu Person unterschiedlich ausgeprägt ist. So reagierten in der Prince et al.-Studie verschiedene Personen stärker auf eine Veränderung des Wettermusters in Abhängigkeit von absoluter Temperatur und Feuchtigkeit, während andere Personen auf eine Veränderung des Luftdrucks vom vorherigen Tag, Veränderung der Temperatur vom vorherigen Tag und Veränderung der Feuchtigkeit von zwei Tagen vorher zum vorherigen Tag reagierten und eine dritte Gruppe auf den absoluten barometrischen Wert, gefolgt von einer Veränderung dieses Luftdrucks beginnend zwei Tage vor dem Schmerzanfall reagierten.

Insbesondere bei Patienten mit häufig wiederkehrenden Beschwerden, z.B. Kopfschmerzen oder Magenschmerzen, wird eine sehr niedrige Bereitschaft bemerkt, Medikamente zu einem frühen Zeitpunkt einzunehmen. Häufig zögern diese Patienten mit der Einnahme der Medikamente, bis sich die Beschwerden in stärkerer Weise manifestiert haben. Dies liegt vor allem daran, dass die Betroffenen durch die häufig wiederkehrenden Schmerzen bereits derartig oft Medikamente einnehmen müssen, dass dies dazu führt, dass jede weitere Medikamenteneinnahme möglichst lang hinausgezögert wird. Zum weiteren können auch Kostenfaktoren eine Rolle spielen.

Diese späte Einnahme ist jedoch in vielen Fällen nachteilig. Insbesondere konnte festgestellt werden, dass z.B. bei Kopfschmerz- und Migränepatienten die Wahrscheinlichkeit, einen Schmerzanfall zu unterdrücken, sich potenziert, je früher das Medikament genommen wird. Trotz dieser Kenntnis, die viele Patienten bereits "an eigenem Leib'' beobachten konnten, besteht weiter das Problem, dass diese Patienten die Einnahme herauszögern, in der Hoffnung, es könnte sich um einen weniger schmerzhaften, in der Regel dann nicht mit einer Luftdruckveränderung/Temperaturveränderung in Beziehung stehenden Anfall handeln.

Die Tatsache, dass es eine große Gruppe von Menschen gibt, die wie oben beschrieben "wetterfühlig" bzw. auf Elektrosmog reagieren, ist bereits seit undenklichen Zeiten bekannt. Ferner besteht das Problem, dass die Betroffenen, insbesondere, wenn die Beschwerden häufiger auftreten, die notwendigen Medikamente erst zu spät einnehmen, ebenfalls bereits seitdem es überhaupt Medikamente für die oben genannten Beschwerden gibt. Wie bereits erklärt führt dies dazu, dass die Medikamente häufig erst zu einem Zeitpunkt genommen werden, wenn sie bereits nicht mehr in der Lage sind, z.B. einen Kopfschmerzanfall wirksam zu bekämpfen (d.h. gänzlich zu verhindern oder zumindest abzuschwächen). Trotz dieses seit langem bestehenden Problems der mangelnden "Compliance" bei Betroffenen, gibt es bislang keine zufriedenstellende Lösung.

Es ist daher die Aufgabe der vorliegenden Erfindung, eine Vorrichtung und deren Verwendung bereitzustellen, die einen Betroffenen bereits frühzeitig von einer Temperatur/Luftdruck/ Feuchtigkeits/ Elektrosmog-Veränderung in Kenntnis setzt und vor möglicherweise auftretenden stärkeren Beschwerden warnt. Es ist eine weitere Aufgabe der vorliegenden Erfindung, eine Vorrichtung und deren Verwendung bereitzustellen, die das Problem der fehlenden "Compliance" zur Einnahme einer Medikation zur Verhinderung und/oder Abschwächung eines wie oben beschrieben bedingten Zustands löst, bereitzustellen.

Es ist noch eine weitere Aufgabe der vorliegenden Erfindung, eine Vorrichtung und deren Verwendung bereitzustellen, die es einem Betroffenen ermöglicht, vor einer Luftdruck/Temperatur/Feuchtigkeits/Elektrosmog-Veränderung gewarnt zu werden, die seinem persönlichen Schmerzprofil entspricht.

Die oben stehenden Aufgaben werden durch die beigefügten unabhängigen Ansprüche gelöst. Bevorzugte Ausführungsformen sind in den abhängigen Ansprüchen beigefügt.

Gemäß der Erfindung wird eine Vorrichtung bereitgestellt, die ein Barometer und/oder eine Thermometer und eine damit gekoppelte Alarmvorrichtung umfasst. "Damit gekoppelte" oder "damit verbundene" Alarmvorrichtung im Sinne der vorliegenden Erfindung bedeutet generell, dass durch die Alarmvorrichtung ein Alarm ausgelöst wird, wenn sich bestimmte Parameter des Luftdrucks oder der Temperatur ändern oder einstellen, wie unten beschrieben. Dabei kann diese Kopplung nicht nur eine funktionelle sondern auch eine örtliche sein, d.h., dass das Barometer und/oder Thermometer wie auch Alarm in einer Einheit wie z.B. einer Uhr oder einem Handy verbunden sind, jedoch ist auch eine örtliche Trennung möglich, z.B. bei der das Barometer und/oder das Thermometer in einer Wetterstation für den Hausgebrauch oder einer großen, kommerziell genutzten Wetterstation integriert sind.

Daher umfasst die vorliegende Erfindung auch solche Vorrichtungen, bei denen das Barometer/Thermometer an einer Stelle, wie z.B. einer häuslichen oder kommerziellen Wetterstation angeordnet sind, während die Alarmvorrichtung an einer anderen Stelle, z.B. in einem Handy oder einer Uhr angeordnet ist. Die Bestandteile können dabei auf dem Fachmann bekannte Weise miteinander kommunizieren, z.B. durch Verwendung von Funk und entsprechende Ausstattung der Bestandteile z.B. mit einem Sender bzw. einem Empfänger.

Das Barometer misst in bekannter Weise einen Luftdruck bzw. dessen Veränderung und es kann sich um jedes konventionelle, dem Fachmann bekannte Barometer handeln. Das Thermometer misst in bekannter Weise die Temperatur bzw. deren Veränderung und es kann sich um jedes konventionelle, dem Fachmann bekannte Thermometer handeln. Die Alarmvorrichtung ist mit dem Barometer und/oder dem Thermometer auf derartige Weise verbunden, dass ein Alarm ausgelöst wird, wenn sich der Luftdruck bzw. die Temperatur in bestimmter Weise verändert und/oder einen bestimmten kritischen Wert annimmt. Die Alarmvorrichtung kann ebenfalls jede dem Fachmann bekannte Alarmvorrichtung sein und insbesondere eine solche, die z.B. in einem Wecker, einem Handy, einer Wetterstation oder einer Uhr, oder auch als Bestandteil eines Laptops oder von Schmuck verwendet wird. Der Alarm, durch den der Benutzer auf die Druckveränderung und/oder die Temperaturveränderung und/oder das Erreichen eines bestimmten kritischen Drucks bzw. einer bestimmten kritischen Temperatur unterrichtet wird, kann vorzugsweise ein akustischer oder visueller, insbesondere bevorzugt ein akustischer Alarm sein. Ebenfalls ist eine Alarmvorrichtung denkbar, die die Form eines Vibrationsalarms annimmt oder die als SMS oder Email z.B. auf ein Handy oder einen Laptop geschickt wird.

Gemäß einer besonders bevorzugten Ausführungsform wird der Alarm ausgelöst, wenn sich der Luftdruck innerhalb einer definierten Zeitspanne um mehr als 2 hPA, noch bevorzugte mehr als 3 hPa verändert, besonders bevorzugt um mehr als 6 hPa. Diese Zeitspanne umfasst 48 h, bevorzugt 24 h, besonders bevorzugt 6 h und noch bevorzugter 1 h.

Gemäß z.B. der oben genannten Prince et al Studie kann eine Luftdruckveränderung aber auch eine Veränderung der Feuchtigkeit wie auch eine Veränderung der Temperatur zu Kopfschmerzanfällen führen. Ebenso ist es möglich, dass bestimmte absolute Werte Beschwerden, wie beispielsweise Migräne, Rheuma oder Arthritis auslösen. Durch die oben beschriebene erfinderische Vorrichtung wird der Betroffene über den Alarm sofort darüber informiert, dass eine derartige Veränderung stattgefunden hat, bzw. ein bestimmter kritischer Wert erreicht ist. "Kritischer Wert" im Zusammenhang der vorliegenden Erfindung ist definiert als der Wert, bei dem bei einem individuellen Betroffenen eine Beschwerde auslöst wird. Dabei kann es sich beispielsweise um einen bestimmten Temperaturbereich oder auch einen bestimmten barometrischen Druckbereich handeln, in dem der Betroffene die Beschwerden erleidet. Besonders häufig sind dies z.B. für Migräne-Patienten die Druckbereiche, die bei den sogenannten "Fön"-Wetterlagen in oder in der Nähe von Bergen auftreten. Ebenfalls bei Migräne-Patienten aber auch häufig bei Patienten mit anderen Beschwerden wie Arthritis, Rheuma, Depressionen oder innerer Unruhe lösen Luftdruckwert-Bereiche im Niedrigdruckbereich, insbesondere im Vorfeld von Unwettern, die genannten Beschwerden aus. Weitere typische Beschwerden, die insbesondere mit Elektrosmog in Zusammenhang stehen sind Schlafstörungen, Kreislaufschwäche oder Atemnot. Es wird geschätzt, dass ca. 4 - 8 Prozent der deutschen Bevölkerung "elektrosensibel" sind, d.h. auf Elektrosmog mit Krankheitssymptomen bzw. Störungen reagieren. Dabei können die Betroffenen diesen Elektrosmog in der Regel weder riechen, noch schmecken, sehen, hören oder tasten, so dass die Beschwerden häufig ohne Vorwarnung durch andere Perzeptionssysteme auftreten.

Eine mögliche Erklärung für die durch Elektrosmog auftretenden Beschwerden sind die durch die elektromagnetische Strahlung auftretenden Wirbelfelder- und -ströme, die z.B. zu Fehlentladungen der Nervenenden führen können.

Von besonderer Wichtigkeit sind elektromagnetischen Felder für Träger von Implantaten wie Herzschrittmachern. Diese können bereits gegenüber niedrigfrequenten Magnetfeldern ab 30 Mikrotesla empfindlich sein.

Sollten sich nach der oben beschriebenen Warnung durch den erfindungsgemäßen Alarm dann tatsächlich leichte anfängliche Beschwerden, wie z.B. Kopfschmerzen oder Magenbeschwerden, einstellen, kann der Betroffene sofort und ohne zu Zögern und abwarten zu müssen, ob tatsächlich eine schwere Schmerzattacke zu erwarten ist, die bei ihm erfahrungsgemäß durch einen Wetterumschwung ausgelöst wird, die geeignete Medikation einnehmen. Dadurch wird in für den Betroffenen sehr vorteilhafter Weise das Problem gelöst, dass die Medikation zu spät eingenommen wird und dann häufig nicht mehr die gewünschte Wirkung aufweisen kann. Eine weiterer Vorteil und damit eine weitere Anwendungsmöglichkeit wäre eine solche Ausführungsform, bei der Patienten, die sonst auf eine chronische Medikation angewiesen sind, beispielsweise Rheuma- oder Arthritis-Patienten, durch die erfindungsgemäße Vorrichtung derartig frühzeitig vor einem Wetterumschwung gewarnt werden können, dass sie auf die chronische Medikation verzichten können und stattdessen die Medikamente nur im Fall einer Warnung durch die Vorrichtung gemäß der Erfindung einnehmen müssen.

Die von einer Luftdruck- und/oder Temperaturveränderung ausgelösten Beschwerden sind insbesondere Kopfschmerzen, Migräne, Asthma, Rheuma, Arthritis, Amputationsschmerzen, Depressionen, Magenbeschwerden, Gelenkschmerzen und Gliederschmerzen. Dabei gibt es sowohl Patienten, die auf eine Luftdruckerhöhung empfindlich reagieren als auch solche, die auf eine Luftdruckerniedrigung empfindlich reagieren, schließlich auch solche, die von beiden Veränderungen betroffen sind. Ferner gibt es Patienten, die unabhängig von der Luftdruckveränderung oder zusätzlich zu dieser auf eine Temperaturveränderung empfindlich reagieren oder die in bestimmten absoluten Wertbereichen des Luftdrucks oder der Temperatur mit Beschwerden reagieren. Die vorliegende Erfindung umfasst alle diese Möglichkeiten.

Die vorliegende Vorrichtung, zumindest jedoch ihr AlarmBestandteil, sollte sich vorzugsweise so häufig wie möglich in der Nähe des Betroffenen befinden, damit dieser das Alarmsignal zur Kenntnis nehmen kann. Besonders bevorzugt ist die Vorrichtung ein Teil einer Uhr oder eines Weckers, ebenfalls bevorzugt Teil eines Handys. Die Vorrichtung, oder zumindest ihr Alarmbestandteil könnte auch Teil eines Schmuckstücks oder eines Laptops sein. Vorstellbar wäre die Integration der vorliegenden Vorrichtung in eine Uhr wie die Casio-Trek-Uhren, die Nike-Ascent Lane oder Oregon Series, die Citizen Taucheruhr oder die Adidas-Clima Cool.

Ebenfalls kann die Vorrichtung Teil einer (Haus)Wetterstation sein, wobei das Alarmsignal, z.B. über Funk zu einem Handy oder einer Uhr übertragen wird. Der Alarm kann in diesem Fall z.B. auch eine SMS oder Email sein, die über das Handy oder den Laptop eines Betroffenen empfangen werden kann.

Ferner könnte die Vorrichtung der vorliegenden Erfindung Teil einer z.B. kommerziellen großen Wetterstation sein, wobei die Daten dann über Funk zu einer z.B. in einem Handy oder einer Uhr vorgesehenen Alarmvorrichtung übertragen werden.

Die gegenwärtige Erfindung betrifft daher auch eine Uhr, ein Handy, einen Laptop und/oder ein Schmuckstück, die die hier beschriebene Vorrichtung, mindestens jedoch ihren Alarmbestandteil umfassen.

Gemäß der vorliegenden Erfindung kann die Vorrichtung weiterhin ein Abteil umfassen, in dem die für den jeweiligen Zustand notwendigen Medikamente, bevorzugt als Einmaldosis, aufbewahrt werden.

Besonders bevorzugt umfasst die Vorrichtung zudem ein Betätigungselement, durch das der Benutzer der Vorrichtung mitteilt, dass er Beschwerden verspürt. Dieses Betätigungselement sollte vorzugsweise mit einem Speicherelement verbunden sein, dass die Mitteilung über die Beschwerden speichern kann, sowie in der Lage ist, die Luftdruck- und/oder Temperaturdaten über einen bestimmten Zeitraum zu speichern. Vorzugsweise beträgt dieser Zeitraum 48 h, besonders bevorzugt einen Monat, noch bevorzugter ein Jahr.

Die Vorrichtung kann auch nur die oben beschriebene Speichereinheit zum Speichern von Luftdruck- und/oder Temperaturdaten aufweisen. Ferner sollte eine Anzeige vorgesehen sein, die dem Benutzer eine Ansicht der gespeicherten Daten erlaubt und ihm dadurch gestattet, seine Beschwerden in eine genauere Korrelation zu den tatsächlichen Wetterbedingungen zu setzen.

Vorteilerhafterweise ist es ferner möglich, die Auslösung des Alarms an das tatsächliche Beschwerdemuster eines Benutzers anzupassen. Dies kann manuell geschehen, z.B. indem der Benutzer selbst die Korrelation zwischen den Beschwerden und den im Speicher festgehaltenen Wetterbedingungen feststellt und daraufhin den Alarm entsprechend anpasst oder durch ein Mustererkennungsprogramm wie unten genauer beschrieben.

Ferner kann neben den Messeinrichtungen für Luftdruck bzw. Temperatur eine Einrichtung zur Messung der Feuchtigkeit bzw zur Messung von Elektrosmog enthalten sein. Diese sind auf bekannte Weise mit der weiteren Einrichtung verbunden und können ausdrücklich in alle oben und weiter unten beschriebenen Ausführungsformen integriert sein. Elektrosmog ist wie oben definiert als elektrische oder elektromagnetische (Wechsel-) Felder, die von den üblicherweise anzutreffenden Werten abweichen. Dies betrifft also sowohl durch Wetter z.B. Gewitter auftretende Veränderungen der elektromagnetischen Umgebung einer betroffenen Person als auch durch hoch frequente Strahlen, wie z.B. die Strahlung von Mobilfunkantennen, Radio- und TV-Sendern, Radaranlagen und Mikrowellen und niedrig frequente Strahlung wie z.B. die von Eisenbahn-Fahrleitungen, Hochspannungsleitungen, Transformatoren, Unterwerk, elektrischen Hausinstallationen, elektrischen Geräten usw. auftretende Veränderungen des Elektromagnetismus in der Umgebung der betroffenen Person. Dabei wird die Gesamtheit der elektromagnetischen Wellen als elektromagnetisches Spektrum bezeichnet. Dieses reicht von niederfrequenter Strahlung mit 10.000 Schwingungen in einer Sekunde, also bis 10 kHz zunächst zu hochfrequenter Strahlung mit bis zu 100 Milliarden Schwingungen in einer Sekunde, also bis 100 GHz in das Infrarote, d.h. die Wärmestrahlung, gefolgt vom sichtbaren Bereich. Bis in diesen Bereich nennt man die Strahlung nicht-ionisierend. Darauf folgt schließlich die ionisierende Strahlung.

Messeinrichtungen für elektrische, magnetische bzw. elektromagnetische Strahlung sind dem Fachmann bekannt. Als nicht begrenzendes Beispiel seien hier z.B. die von Aaronia erhältlichen Niedrig- bzw. Hochfrequenzspektrumanalysatoren zu nennen wie z.B. der unter der Bezeichnung SPECTRAN HF 6060 vertriebene.

Gemäß der besonders bevorzugten Ausführungsform der vorliegenden Erfindung wird die Verwendung der oben beschriebenen Vorrichtung zur Frühwarnung von Patienten, die auf Luftdruck/Temperatur/Feuchtigkeits/Elektrosmog-Veränderungen bzw. auf bestimmte absolute Werte empfindlich reagieren, beansprucht. Der mit der Messvorrichtung in Verbindung stehende Alarm gibt ein Alarmsignal ab, sobald sich der Wert auf eine bestimmte Weise verändert, bevorzugt bei einer Veränderung um mehr als 3 hPa, bevorzugter mehr als 4 hPa, besonders bevorzugt mehr als 6 hPa, insbesondere mehr als 12 hPa z.B. innerhalb von 48 h, 24 h, 6 h oder 1 h für den Luftdruck. Alternativ oder zusätzlich wird ein Alarm ausgelöst, wenn bestimmte absolute kritische Werte erreicht werden.

Vorzugsweise ist die Vorrichtung derartig ausgestaltet, dass die Temperaturveränderung als die bestimmte Temperaturveränderung angesehen wird, wenn sich die Temperatur innerhalb von sechs Stunden um mehr als 15°C, besonders bevorzugt mehr als 10°C verändert.

Bevorzugt liegen diese absoluten Werte des Luftdrucks in einem Bereich von 945 bis 960 hPa, noch bevorzugter bei 950 bis 960 hPa.

Gemäß einer besonders bevorzugten Ausführungsform umfasst die Erfindung außerdem ein Programm zur Mustererkennung. Dieses Programm zur Mustererkennung sollte vorzugsweise trainierbar, d.h. in der Lage sein, von dem Benutzer eingegebene Daten zu verarbeiten und so ein Muster zu erstellen, nach dem sich dann die Auslösung des Alarms richtet.

Für die Anwendung bedeutet dies, dass ein Betroffener der Vorrichtung mitteilen kann, dass seine Beschwerden entstanden sind; vorzugsweise ist es zudem für den Betroffenen möglich, der Vorrichtung die Schwere der Beschwerden mitzuteilen. Gemäß einer besonders bevorzugten Ausführungsform sollte die Vorrichtung in diesem Fall auch eine Uhr enthalten, damit das Programm zur Mustererkennung in der Lage ist, die Mitteilung des Betroffenen mit einer bestimmten Wetterlage in Bezug zu setzen.

Dabei sollte es vorzugsweise möglich sein, der Vorrichtung durch einmalige Eingabe mitzuteilen, dass Beschwerden entstanden sind, ohne dass der Alarm ausgelöst wurde, oder zu bestätigen, dass Beschwerden entstanden sind, nachdem der Alarm ausgelöst wurde, wobei das letztere dazu dienen würde, dem Programm mitzuteilen, dass der Alarm korrekt ausgelöst wurde und dadurch sich das bisherige Muster bestätigt hat, während ersteres dazu dienen würde, dem Programm mitzuteilen, dass das Muster noch unvollständig und verbesserungsbedürftig ist, d.h. einem Training und "Lernvorgang" des Programms dienen würde.

Vorzugsweise sollte es möglich sein, dass die einmalige Eingabe durch einen Knopfdruck, eine SMS oder eine Stimmeingabe erfolgt.

Bestandteile der Vorrichtung, die ein derartiges Mustererkennungsprogramm beinhaltet, sollten daher zusätzlich zu dem eigentlichen Programm eine Speichereinheit sein, die Luftdruck und/oder Temperaturdaten, sowie deren Veränderung, sowie die Zeit und das Auftreten von Beschwerden abspeichert. Ferner sollte eine Uhreinheit vorhanden sein, um die Luftdruck/Temperatur- bzw. Kopfschmerzdaten zueinander in zeitliche Beziehung zu setzen. Vorzugsweise speichert dieser Speicher die Daten über mindestens 48 h.

Außerdem sollte ein Betätigungselement vorhanden sein, durch dass der Benutzer dem Programm mitteilen kann, dass Beschwerden auftreten. Zusätzliche Elemente könnten z.B. ein Display sein, durch das der Benutzer über die Veränderung von Luftdruck und/oder Temperatur und/oder Feuchtigkeit und/oder Elektrosmog, vorzugsweise im Verhältnis zum Auftreten der Beschwerden auch optisch informierbar ist.

Besonders bevorzugt arbeitet die erfindungsgemäße Vorrichtung mit einem Programm zur Mustererkennung, das bereits konventionell verwendet wird und dem Fachmann bekannt ist, wie z.B. einem Bayes-Filter, der für SPAM Anwendungen beim Empfang von Emails verwendet wird oder dem "neuronalen Netz", das z.B. für die Bilderkennung eingesetzt wird. Das Programm ist vorzugsweise in der Lage, ein Muster zwischen dem Auftreten von Beschwerden im Verhältnis zu absoluten Luftdruck- und/oder Temperaturwerten und/oder Feuchtigkeitwerten und/oder Elektrosmogwerten bzw. deren Veränderung über die Zeit zu erkennen, wobei das Programm vorzugsweise verschiedene Zeitabstände zu den Veränderungen in Bezug setzen kann, wie z.B. 5 sec, 1 min, 5 min, 30 min, 1 h, 6 h, 24 h und 48 h.

### BEISPIELE

### Beispiel 1

Ein Barometer wird mit einer Alarmvorrichtung gekoppelt. Die Alarmvorrichtung gibt dem Benutzer ein akustisches Signal, sobald sich der Luftdruck um mehr als 4 hPa pro h verändert.

Der Benutzer kann nun bereits prophylaktisch oder nach Auftreten leichter, sonst unter Umständen als unkritisch angesehener Beschwerden, wie z.B. Kopfschmerzen, bereits die notwendige Medikation einnehmen und dadurch das Auftreten starker Beschwerden gänzlich verhindern oder zumindest abschwächen.

### Beispiel 2

Eine Uhr wird mit einem Barometer und einem Thermometer ausgestattet, wobei dies bereits konventionell bekannt ist und von einem Fachmann auf übliche Weise durchgeführt werden kann. Ferner wird eine Alarmvorrichtung vorgesehen. Diese Alarmvorrichtung wird auf bekannte Weise mit dem Barometer und dem Thermometer gekoppelt. Diese Kopplung geschieht derartig, dass eine Luftdruckveränderung von 4 hPa/h, wie gemessen durch das Barometer und/oder eine Temperaturveränderung von 10°C/h einen Alarm auslösen.

Dieser Alarm wird dem Benutzer durch ein akustisches Signal mitgeteilt.

Der Benutzer kann nun bereits prophylaktisch oder nach Auftreten leichter, sonst unter Umständen als unkritisch angesehener Beschwerden, wie z.B. Kopfschmerzen, bereits die notwendige Medikation einnehmen und dadurch das Auftreten starker Beschwerden gänzlich verhindern oder zumindest abschwächen.

### Beispiel 3

Ein Handy wird mit einem Barometer und einem Thermometer ausgestattet sowie einer Alarmvorrichtung. Dies kann analog zu Beispiel 2 geschehen.

Das Handy unterrichtet den Benutzer je nach dessen Wahl akustisch, visuell, durch Vibrationsalarm oder durch eine SMS von der Luftdruckveränderung/Temperaturveränderung wie in Beispiel 1 und 2 beschrieben mit den ebenfalls dort beschriebenen Vorteilen.

### Beispiel 4

Die in Beispiel 1 beschriebene Vorrichtung, die in Beispiel 2 beschriebene Uhr und das in Beispiel 3 beschriebene Handy werden zusätzlich mit einem Programm zur Mustererkennung, in diesem Fall einem speziell angepassten Bayes-Filter, versehen. Dafür enthält die Vorrichtung einen zusätzlichen Speicher, der die Luftdruck- und Temperaturdaten der vergangenen zwei Wochen speichert. Diese Anpassung eines bekannten Filterprogramms an die hier vorliegenden Erfordernisse ist für den Fachmann ohne unzumutbaren Aufwand möglich. Zusätzlich ist nun auch für die Vorrichtung des Beispiels 1 und das Handy des Beispiels 3 eine Uhr vorgesehen. Das Programm nimmt die vom Benutzer eingegebenen Daten der Beschwerden auf. Beispielsweise wird ein Migräne-Patient dem Programm immer dann eine Mitteilung machen, z.B. durch einfache Tasteneingabe, Stimmeingabe oder SMS, wenn ein Migräneanfall beginnt. Nach einer anfänglichen Lernphase sollte sich im Fall von den Betroffenen, die tatsächlich Beschwerden zeigen, die Luftdruck und/oder Temperaturabhängig sind, ein Muster herausbilden, dass von dem Programm erkannt wird. Daraufhin kann das Programm nach dem gelernten Muster den Alarm individuell für jeden Patienten auslösen.

### Beispiel 5

Eines der oben beschriebenen Beispiele 1 - 4 wird weiterhin mit einem Hygrometer sowie einer Vorrichtung zur Messung von Elektrosmog verbunden. Die gemessenen Werte lösen wie beschrieben einen Alarm aus und warnen so den Patienten frühzeitig vor einer jeweiligen Veränderung, im Fall der Kombination mit dem Mustererkennungsprogramm vor einer für ihn typischen Veränderung.

## Patentansprüche

1. Vorrichtung, umfassend ein Barometer und/oder ein Thermometer und eine Alarmeinheit, die mit dem Barometer und/oder Thermometer verbunden ist.

2. Vorrichtung gemäß Anspruch 1, wobei mindestens die Alarmeinheit Teil einer Uhr, eines Weckers, eines Handys, eines Laptops, eines Schmucks oder einer Wetterstation ist.

3. Vorrichtung gemäß Anspruch 1 oder 2, wobei mindestens das Barometer und/oder das Thermometer Teil einer Wetterstation sind.

4. Vorrichtung gemäß Anspruch 1, 2 oder 3, wobei die Alarmvorrichtung einen Alarm gibt, sobald sich der Luftdruck und/oder die Temperatur auf bestimmte Weise verändert und/oder sobald ein bestimmter kritischer absoluter Luftdruck/Temperaturbereich erreicht wird.

5. Vorrichtung gemäß einem der Ansprüche 1 bis 4, wobei die Druckveränderung eine Luftdruckveränderung ist und als die bestimmte Luftdruckveränderung angesehen wird, wenn sich der Druck innerhalb von einer 48 h, vorzugsweise 24 h, besonders bevorzugt 6 h, noch bevorzugter 1 h, besonders bevorzugt 1 min, noch bevorzugter 5 sec. um mehr als 2, vorzugsweise mehr als 3, besonders bevorzugt mehr als 4, noch bevorzugter mehr als 6 hPa, insbesondere bevorzugt 12 hPa ändert.

6. Vorrichtung gemäß einem der Ansprüche 1 bis 5, wobei die Temperaturveränderung als die bestimmte Temperaturveränderung angesehen wird, wenn sich die Temperatur innerhalb von sechs Stunden um mehr als 15°C, besonders bevorzugt mehr als 10°C verändert.

7. Vorrichtung gemäß einem der Ansprüche 1 bis 6, wobei der bestimmte absolute Druckbereich 945 - 960 hPa beträgt.

8. Vorrichtung gemäß einem der Ansprüche 1 bis 7, wobei sie außerdem ein Programm zur Mustererkennung umfasst.

9. Vorrichtung gemäß Anspruch 8, wobei das Programm zur Mustererkennung trainierbar ist, d.h. in der Lage ist, von dem Benutzer eingegebene Daten zu verarbeiten und so ein Muster zu erstellen, nach dem sich dann die Auslösung des Alarms richtet.

10. Vorrichtung gemäß Anspruch 8 oder 9, wobei der Vorrichtung durch einmalige Eingabe mitgeteilt wird, dass Beschwerden entstanden sind.

11. Vorrichtung gemäß Anspruch 10, wobei die einmalige Eingabe durch einen Knopfdruck, eine SMS oder eine Stimmeingabe erfolgt.

12. Vorrichtung gemäß einem der Ansprüche 8 bis 11, wobei als Programm zur Mustererkennung ein dem Bayes-Filter oder dem neuronalen Netz analoges Programm zur Mustererkennung verwendet wird.

13. Vorrichtung gemäß einem der vorstehenden Ansprüche, wobei ein zusätzlicher Behälter zur Aufbewahrung von Medikamenten vorgesehen ist.

14. Vorrichtung gemäß einem der vorstehenden Ansprüche, wobei zusätzlich ein Hygrometer integriert ist.

15. Vorrichtung gemäß einem der vorstehenden Ansprüche, wobei zusätzlich eine Vorrichtung zur Messung von Elektrosmog integriert ist.

16. Verwendung der Vorrichtung gemäß einem der Ansprüche 1 bis 15 zur Frühwarnung von Patienten, die auf Druck /Temperatur/Feuchtigkeits/Elektrosmog-Veränderungen bzw. bestimmte kritische absolute Druck/ Temperatur/Feuchtigkeits/Elektrosmog-Werte empfindlich reagieren um diesen eine rechtzeitige Einnahme eines Medikaments zu ermöglichen.

17. Verwendung gemäß Anspruch 16, wobei es sich bei den Patienten um solche handelt, die auf die obigen Veränderungen bzw. bestimmte kritische absolute Werte mit Kopfschmerzen, innerer Unruhe, Depression, Amputationsschmerzen, Asthma, Rheuma, Blutdruckschwankungen, Magenbeschwerden, Gelenkschmerzen, Gliederschmerzen und/oder Migräne reagieren.

18. Uhr, umfassend die Vorrichtung gemäß einem der Ansprüche 1 bis 15.

19. Handy, umfassend die Vorrichtung gemäß einem der Ansprüche 1 bis 15.

20. Laptop, umfassend die Vorrichtung gemäß einem der Ansprüche 1 bis 15.

21. Verwendung eines Programms zur Mustererkennung zur Frühwarnung von Patienten, die an Beschwerden leiden, die von Druck/Temperatur/Feuchtigkeits/Elektrosmog-Veränderungen ausgelöst werden.

22. Verwendung gemäß Anspruch 21, wobei das Programm zur Mustererkennung die in den Ansprüchen 9 bis 12 definierten Merkmale aufweist.
